# EUROPEAN PATENT APPLICATION

(11) **EP 4 576 284 A2**
(43) Date of publication of application: **25.06.2025**
(21) Application number: 24215199.1
(22) Date of filing: 25.11.2024
(51) Int. Cl.: H01M 8/0606, H01M 8/04014, C01B 3/08, H01M 8/04111, H01M 8/04119, H01M 8/0662

(54) **HIGH-EFFICIENCY, ZERO-EMISSION ALUMINUM-BASED POWER GENERATION SYSTEM AND METHOD FOR VEHICLE**

(30) Priority: 22.12.2023 US 202318394362
(71) Applicant: The Boeing Company, Arlington, VA 22202 (US)
(72) Inventor: YANG, Lu, 22202 Arlington (US); AGUILAR, Charles, 22202 Arlington (US)
(74) Representative: Sandri, Sandro

(57) **Abstract**

Highly efficient apparatuses and systems comprise power generation systems including energy derived from an aluminum/water reactor in line with fuel cell electricity generation, with hydrogen and water produced at system stages and recirculated and re-used through the system in combination with waste heat reclamation increasing system efficiency and sustainability for powering vehicle propulsion needs.

## Description

### TECHNOLOGICAL FIELD

The present disclosure relates generally to the field of energy storage and power generation. More specifically the present disclosure relates to the field of high-efficiency and high-energy density vehicle power generation systems, apparatuses, and methods.

### BACKGROUND

Sustainable electrical power generation technologies with near-zero emissions have been sought after for meeting large-scale propulsion requirements but have proven unsuccessful thus far. Additionally, the production of hydrogen using metal/water reactors has been proposed as a means to generate hydrogen for hydrogen-driven power generation systems. However, the challenge of achieving scalable, sustainable, "clean," and zero-emission power for propelling large objects remains unsolved.

Unless explicitly identified as such, no statement herein is admitted as prior art merely by its inclusion in the Technological Field and/or Background section.

### SUMMARY

Present aspects are directed to efficient, zero-emission (e.g., from "fossil fuels", with zero-emission of hydrocarbons, NOx, SOx, etc., referred to equivalently herein as "emission free") energy storage and power generation systems incorporated onboard a vehicle as energy and power generation apparatuses, systems, and methods, for the sustainable, highly-efficient operation of a vehicle, with the vehicle including, for example, a crewed and/or uncrewed terrestrial vehicle (e.g., cars, vans, trucks, motorcycles, rail-based vehicles), a crewed and/or uncrewed marine surface and/or sub-surface vehicle, a crewed and/or uncrewed aircraft, and combinations thereof.

Present aspects are directed to a system for zero-emission propulsion for a vehicle, with the system including an aluminum/water reaction assembly, with the aluminum/water reaction assembly including aluminum/water reactor configured to react an aluminum-containing reactant from an aluminum-containing reactant source with a water reactant from a water reactant source to form an aluminum-containing reaction product, and a hydrogen-containing gas mixture that can contain a hydrogen reaction product and water vapor. The present system further includes an aluminum-containing reaction product collector, and a first heat exchanger in thermal communication with at least one of the aluminum/water reactor and the aluminum-containing reaction product collector. The present system further includes a mechanical assembly in communication with the hydrogen-containing gas mixture, and a fuel cell assembly in system communication with the aluminum/water reactor, with the fuel cell assembly including a fuel cell configured to react an amount of hydrogen from the aluminum/water reactor with an amount of oxygen directed to the fuel cell to form electricity and a water byproduct. The system further includes a second heat exchanger in thermal communication with the fuel cell, and an electrically-powered motor in communication with the fuel cell.

In another present aspect, the mechanical assembly further includes a mechanical propulsion assembly, with the mechanical propulsion assembly configured to convert thermal energy into mechanical power.

In another present aspect, the mechanical assembly further comprises a mechanical electric generator, said mechanical electric generator configured to convert thermal energy into electricity.

In another present aspect, the system further includes a hydrogen separator in communication with the mechanical assembly.

In another present aspect, the water byproduct produced in the fuel cell is configured to recirculate from the fuel cell to the aluminum/water reactor.

In another present aspect, unreacted hydrogen from the fuel cell is configured to recirculate into at least one of the fuel cell and the aluminum/water reactor.

In a further present aspect, the fuel cell is a solid oxide fuel cell.

In another aspect, the fuel cell is at least one of a high temperature proton exchange membrane fuel cell and a phosphoric acid fuel cell.

In another present aspect, the first heat exchanger is configured to harvest waste heat from a component of the aluminum/water reaction assembly that can be at least one of the aluminum/water reactor and the aluminum-containing reaction product collector.

In another present aspect, the second heat exchanger is configured to harvest waste heat from at least one of the water byproduct from the fuel cell, exhaust air vented from the fuel cell, and heat otherwise rejected by the fuel cell.

In another present aspect, an amount of oxygen reacted in the fuel cell with the hydrogen reaction product is delivered to the fuel cell as atmospheric oxygen.

In a further present aspect, an amount of oxygen reacted in the fuel cell with the hydrogen reaction product is delivered to the fuel cell as at least one of enriched oxygen from an enriched oxygen supply and pure oxygen delivered to the fuel cell from a pure oxygen supply.

In another present aspect, at least one of the first heat exchanger and the second heat exchanger is configured to direct at least a portion of the waste heat to address a thermal demand of a different vehicle system.

In another present aspect, at least one of the first heat exchanger and the second heat exchanger is configured to direct at least a portion of the waste heat to at least one of one or more waste heat recovery devices and one or more waste heat recovery systems, said one or more waste heat recovery device and said one or more waste heat recovery systems configured to generate electricity from heat.

In another present aspect, the heat-to-power device comprises a thermoelectric device.

In another present aspect, the aluminum-containing reactant includes powdered aluminum.

In another present aspect, the aluminum-containing reactant includes an average particle size ranging from about 1 µm to about 100 µm.

In a further present aspect, the system further includes a fluid medium in communication with at least one of the first heat exchanger and the second heat exchanger, with the at least one of the first heat exchanger and the second heat exchanger configured to increase the temperature of the fluid medium from an initial fluid medium temperature to a second fluid medium temperature.

In another present aspect, the fluid medium comprises at least one of atmospheric air, water, oxygen, and hydrogen.

In another present aspect, the system produces zero hydrocarbon emissions.

In another present aspect, the system produces zero-emissions.

In a further present aspect, the present system is further in communication with a rechargeable battery, with the rechargeable battery configured to receive an electrical charge from the system.

Further present aspects are directed to a vehicle including a system for zero-emission propulsion for a vehicle, with the system including an aluminum/water reaction assembly, with the aluminum/water reaction assembly including aluminum/water reactor configured to react an aluminum-containing reactant from an aluminum-containing reactant source with a water reactant from a water reactant source to form an aluminum-containing reaction product, and a hydrogen-containing gas mixture that can contain hydrogen reaction product and water vapor and heat. The present system further includes an aluminum-containing reaction product collector, and a first heat exchanger in thermal communication with at least one of the aluminum/water reactor and the aluminum-containing reaction product collector. The present system further includes a mechanical assembly in communication with the hydrogen-containing gas mixture, and a fuel cell assembly in system communication with the aluminum/water reactor, with the fuel cell assembly including a fuel cell configured to react an amount of hydrogen reaction product from the aluminum/water reactor with an amount of oxygen directed to the fuel cell to form electricity and a water byproduct. The system further includes a second heat exchanger in thermal communication with the fuel cell, and an electrically-powered motor in communication with the fuel cell.

Another present aspect is directed to an aircraft, with the aircraft including a system for zero-emission propulsion for a vehicle, with the system including an aluminum/water reaction assembly, with the aluminum/water reaction assembly including aluminum/water reactor configured to react an aluminum-containing reactant from an aluminum-containing reactant source with a water reactant from a water reactant source to form an aluminum-containing reaction product, and a hydrogen-containing gas mixture that can contain hydrogen reaction product and water vapor and heat. The present system further includes an aluminum-containing reaction product collector, and a first heat exchanger in thermal communication with at least one of the aluminum/water reactor and the aluminum-containing reaction product collector. The present system further includes a mechanical assembly in communication with the hydrogen-containing gas mixture, and a fuel cell assembly in system communication with the aluminum/water reactor, with the fuel cell assembly including a fuel cell configured to react an amount of hydrogen reaction product from the aluminum/water reactor with an amount of oxygen directed to the fuel cell to form electricity and a water byproduct. The system further includes a second heat exchanger in thermal communication with the fuel cell, and an electrically-powered motor in communication with the fuel cell.

Present aspects are further directed to a method for powering a vehicle via onboard-generated electricity from a zero-emission power generation system, with the method including reacting in an aluminum/water reactor an amount of aluminum-containing reactant from an aluminum-containing reactant source with an amount of water reactant from at least one of an initial water source and recirculated water to form a hydrogen-containing gas mixture and an aluminum-containing reaction product in the aluminum/water reaction, directing the hydrogen-containing gas mixture from the aluminum/water reactor at a temperature ranging from about 350°C to about 700°C and at a pressure ranging from about 300 psi to about 3000 psi to a mechanical assembly, and directing a hydrogen reaction product from the mechanical assembly to a fuel cell, with the fuel cell comprising at least one fuel cell inlet and at least one fuel cell outlet. The method further includes reacting in the fuel cell at least one of the hydrogen reaction product and recirculated hydrogen with atmospheric air in a fuel cell reaction to generate water and electricity from the zero-emission power generation system, directing electricity from the fuel cell to power a motor, and with the motor in electrical communication with the fuel cell. The present method further includes directing water produced in the fuel cell from the fuel cell as the recirculated water to the aluminum/water reactor, harvesting waste heat from the aluminum/water reaction in a first heat exchanger, with the first heat exchanger in communication with at least one of the aluminum/water reactor and the aluminum-containing reaction product collector, with the first heat exchanger configured to heat the water reactant directed to the aluminum/water reactor, and harvesting waste heat from heated air produced from the fuel cell reaction in a second heat exchanger, with the second heat exchanger in communication with the fuel cell.

In another present aspect, a method further includes recirculating an amount of hydrogen from the at least one fuel cell outlet to the at least one fuel cell inlet.

In another present aspect, a method further includes directing a further amount of electricity from the fuel cell to a rechargeable battery, with the rechargeable battery in electrical communication with the fuel cell, and with the rechargeable battery configured to receive an electrical charge from the zero-emission power generation system.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of an energy power generation system, according to present aspects;
FIG. 2A is a partially exposed view of a vehicle in the form of an aircraft comprising an energy power generation system, according to present aspects;
FIG. 2B is an enlarged partially exposed view of a vehicle in the form of an aircraft comprising an energy power generation system, according to present aspects;
FIG. 3 is a flowchart outlining a method, according to present aspects;
FIG. 4 is a flowchart outlining a method according to present aspects; and
FIG. 5 is a flowchart outlining a method, according to present aspects.

### DETAILED DESCRIPTION

Present aspects incorporate the use onboard a vehicle of a high-energy density aluminum-containing reactant introduced to react with water in an aluminum/water combustion assembly (equivalently referred to equivalently herein as an "aluminum/water reactor" and "Al/water reactor") to produce hydrogen (H₂) and aluminum-containing reaction product (that can include alumina, aluminum hydroxide, unreacted aluminum, etc.) as aluminum/water reaction byproducts. The aluminum-containing reactant, according to present aspects, can be powdered aluminum, with the powdered aluminum having an average particle size ranging from about 1 µm to about 100 µm. The high-energy density aluminum-containing reactant can be stored in communication with the system in an aluminum-containing reactant storage vessel.

The generated thermal energy from the exothermic reaction from the aluminum/water reactor can be used (e.g., by creating steam) to generate electricity at a mechanical assembly (comprising, for example, a mechanical electrical generator) to convert thermal energy into electricity via, for example, a mechanical electrical generator, etc., and the hydrogen produced at the aluminum/water reactor along with recirculated hydrogen in the system can be further directed to a fuel cell with ambient air to generate water, electricity, and heat.

In another present example, the generated thermal energy from the exothermic reaction in aluminum/water reactor can be used (e.g., by creating steam) to generate, for example, rotational motion at a mechanical assembly (that can include, for example, a turbine/gearbox/propeller assembly) for the purpose of converting thermal energy into mechanical energy that is then configured to provide mechanical power and/or propulsion, for example, for a vehicle configured to incorporate present systems.

That is, according to present aspects, the operation of the present systems efficiently converts thermal energy from the high-temperature, high-pressure stream produced by the reaction in the Al/water reactor into mechanical work that is used by the system in two ways by: 1) directly driving mechanical propulsion systems (e.g., via attendant gearbox 26 in communication with turbine 24 and propeller 27; and/or 2) driving an electrical generator for electricity generation to drive an electric motor 36 (referred to equivalently herein as an "electrically-powered motor").

Unreacted hydrogen from the fuel cell can be recirculated back to the fuel cell to react with oxygen from the ambient air (referred to equivalently herein as "environmental air" and "atmospheric air") to continue the production of water as a fuel cell reaction product. Water produced by the fuel cell reaction (along with unreacted hydrogen) can then be directed to the aluminum/water reactor of the aluminum/water combustion assembly to react with additional amounts of aluminum reactant to further the production of hydrogen in the efficient and sustaining system.

According to present aspects, apparatuses, systems, and methods are disclosed for the combined: 1) effective energy harnessing of the highly exothermic Al/water reaction, 2) extraction of power from the produced high-temperature stream through a mechanical assembly (e.g., a mechanical electrical generating device or a mechanical propulsion assembly); 3) incorporation of at least one fuel cell system for reacting hydrogen with oxygen to produce water and electricity, and 4) waste heat recovery through the strategic and selected incorporation into the system of one or more heat exchangers. Presently disclosed aspects achieve significantly improve levels of energy storage and power generation system efficiency, delivered high-energy density, and fossil fuel component emission elimination (e.g., the present system will not produce or emit hydrocarbons, NOx, SOx, etc.), resulting in a zero-emission energy storage and power generation system for large scale power production systems for electrically-powering, mechanically powering, and/or electric-assist-powering (e.g., hybrid electric and mechanical powering) of vehicles including, for example, aircraft.

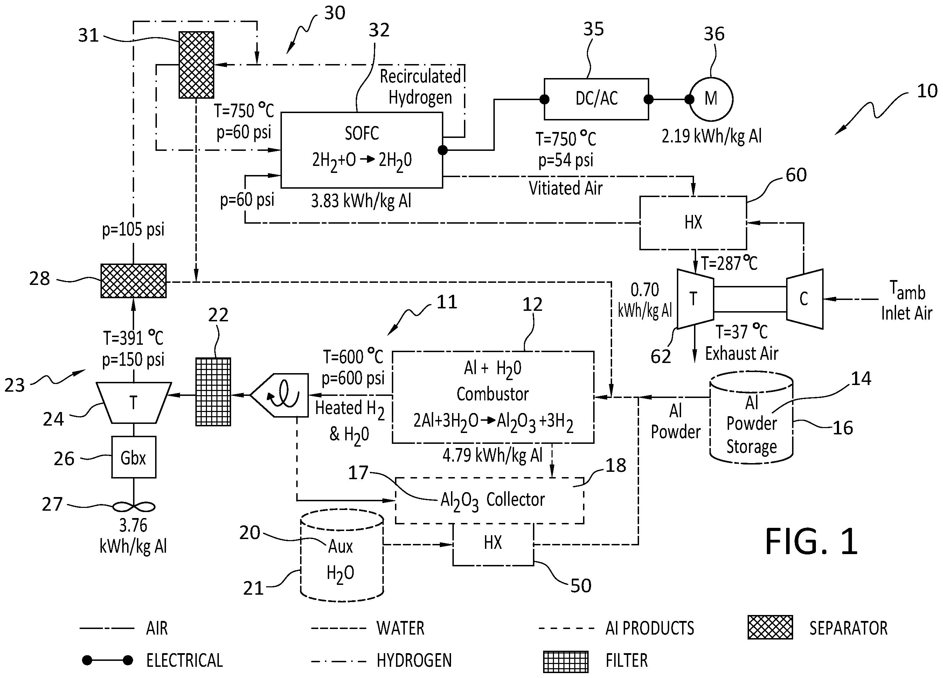

FIG. 1 is a schematic diagram of a power generation system that can be configured to power a vehicle that can be a large vehicle including, for example, a crewed and/or uncrewed terrestrial vehicle (e.g., cars, vans, trucks, motorcycles, rail-based vehicles), a crewed and/or uncrewed marine surface and/or sub-surface vehicle, a crewed and/or uncrewed aircraft, and combinations thereof.

According to further present aspects, the present power generation systems incorporate an aluminum/water reactor assembly stage that liberates and generates hydrogen from starting materials that include aluminum and water, with the present power generation systems then circulating and recirculating hydrogen to a fuel cell stage with the fuel cell configured to produce electricity and water from the hydrogen and oxygen reactants provided to the fuel cell, that can be, for example, a solid oxide fuel cell. Water generated by the reaction within the fuel cell(s) is recirculated within the present power generation system to the aluminum/water reactor to further generate amounts of hydrogen.

The present apparatuses, systems, and methods are configured to produce fossil fuel emission-free amounts of electricity able to power electric motors and/or produce mechanical power able to power a mechanical propulsion assembly from a system that is configured to be maintained onboard a vehicle that can include an aircraft. In the case of powering an aircraft, the present systems are configured to react a high-energy density metal in the form of aluminum with water to produce and deliver a selected amount of hydrogen to a fuel cell that, in combination with a plurality of selectively placed heat exchangers, produce and deliver a selected amount of electrical energy configured to power electrical motors and/or deliver mechanical power able to power a mechanical propulsion assembly on an aircraft that is configured to achieve and sustain aircraft flight over a selected range, and at selected altitudes.

According to present examples, the present apparatuses, systems, and methods are configured to generate emission-free amounts of electricity as an electrical power supply configured to augment a hybrid power configuration for a vehicle, including an aircraft.

According to present aspects, and as shown, at least in FIG. 1, a system 10 directed to emission-free (zero fossil fuel emission) power generation includes four main stages integrated into the present apparatuses, systems, and methods to seamlessly operate within a single highly efficient and substantially self-sustaining electrical and/or mechanical energy generation system; a system that further operates to deliver additional energy benefits to electrically powered vehicle systems, and that further reduces the electrical demand of such vehicle systems on stored energy systems such as, for example, batteries, etc. In one stage (e.g., a "first" stage), system 10 includes an aluminum/water combustion assembly 12 that provides an efficient and zero-emission process for generating hydrogen and aluminum-containing reaction products that can include alumina, aluminum hydroxide, and unreacted aluminum as a byproduct from reacting, with water, an aluminum-containing source reactant (that can be in the form of aluminum powder 14) provided to aluminum/water combustion assembly 12 from aluminum-containing source storage (vessel) 16. The aluminum reactant and water react according to the general reaction formula (I), (II), (III):

2Al + 6H₂O -> 2Al(OH)₃ +3H₂ + heat (I)

2Al + 4H₂O -> 2AlO(OH) +3H₂+ heat (II)

2Al + 3H₂O -> Al₂O₃ +3H₂ + heat (III)

According to present aspects, aluminum-containing source storage 16 can be maintained as an onboard component of system 10 in a vehicle that can be, by way of example, an aircraft.

As shown in FIG. 1, and according to one example, in this first stage of system 10, the water and aluminum-containing reactant 14 are provided to the Al/water reactor 12 with the highly exothermic reaction promoting the formation of aluminum-containing reaction products and hydrogen, with a hydrogen-containing gas mixture and heat released from the reaction being used initially to drive a mechanical turbine operation. According to present aspects, the system parameters shown in FIG. 1 outline an example of the potential operating temperature, pressure, and the energy release per kg of aluminum fuel (e.g., aluminum reactant) at various stages. The precise amount of energy produced by the present system stages, and by the total system can vary accordingly. Present systems are capable of producing the energy necessary to power larger aircraft, with the power produced varying along with the temperatures and pressures generated. For instance, present systems, apparatuses, and methods can be configured to generate an amount of electricity and/or mechanical energy ranging from about 0.1 MWh to about 250 MWh during operating flight phases. Accordingly, condition values set forth in FIG. 1 are not intended to be limiting and are presented as exemplary system values, according to present aspects.

According to one example presented, as shown in FIG. 1, the high-temperature (e.g., T= 600°C) high pressure stream (e.g. p=600 psi) is regulated within the Al/water reactor 12 with reaction byproduct in the form of aluminum-containing reaction product(s) separated and collected at the aluminum-containing reaction product collector 18 (referred to equivalently herein as an "Al₂O₃ collector", as Al₂O₃ may be the predominant aluminum-containing compound produced along with, for example, aluminum hydroxide, unreacted aluminum, etc.,)-and with heated hydrogen and water vapor in the form of steam (e.g., hydrogen-containing gas mixture) directed to a turbine 24 with a mechanical propulsion energy at the propeller of about 3.76 kWh/kg of aluminum. The mechanical drive operation of a propulsion device such as, for example, a turbine, an electrical generator, etc., represents the second "stage" of system 10. As stated herein, and according to present aspects, the present system operation efficiently converts thermal energy from the high-temperature, high-pressure stream into mechanical work that is used by the system in two ways by: 1) directly driving mechanical propulsion systems (e.g., via attendant gearbox 26 in communication with turbine 24 and propeller 27; and/or 2) driving an electrical generator for electricity generation to drive one or more electric motor 36 (referred to equivalently herein as an "electrically-powered motor").

As shown in FIG. 1, a hydrogen/steam mixture leaving the turbine (or leaving an electrical generator) can cool, for example, to a temperature of about 390°C with a commensurate drop in pressure to about 150 psi as the hydrogen/steam mixture (e.g., the hydrogen-containing gas mixture) can optionally pass through hydrogen filter 28 that can be a hydrogen separator molecular sieve or similar apparatus configured to separate the water vapor from the hydrogen. The water vapor can then be recirculated as and otherwise directed as a recycled reactant water source (including as, for example water vapor) back to the Al/water reactor 12, for further reaction with aluminum in the Al/water reactor.

Following the water separation step, as shown in FIG. 1, the separated hydrogen gas is then directed to fuel cell circuit 30. Fuel cell circuit 30 represents the third "stage" of system 10. As shown in FIG. 1, hydrogen separated by water separator 31 is heated to a temperature of about 750°C and reduced to a pressure of about 60 psi, for example, with the heated hydrogen directed into fuel cell 32. An amount of atmospheric oxygen (referred to equivalently herein as "environmental oxygen") from ambient air (referred to equivalently herein as "environmental air" and "atmospheric air") is provided into fuel cell 32 from a directed flow of ambient air. In addition, although not shown in FIG. 1, oxygen can be pure oxygen supplied from a pure oxygen source and/or can be enriched oxygen from an enriched oxygen source to fuel cell 32 to react with the hydrogen introduced to fuel cell 32. Fuel cell 32 can be, for example, a solid oxide fuel cell.

Present aspects contemplate an efficiency tradeoff between providing enriched and/or pure reactant oxygen to the fuel cell as opposed to oxygen derived from ambient air; as oxygen from ambient air requires no storage while enriched oxygen from an enriched oxygen supply and/or pure oxygen from a pure oxygen supply can improve reaction efficiency, but can also increase overall system weight due to the oxygen storage vessels (e.g., tanks) present for the pure and/or enriched oxygen delivery to the fuel cell. In addition, ambient air, while not necessarily impacting system efficiency, can add weight to the system as ambient can require compression as compared to pure oxygen and/or enriched oxygen delivered from pressurized oxygen storage vessels. In addition, pure oxygen can complicate material compatibility relative to surfaces wetted by the O₂ reactant. Accordingly, an amount of oxygen reacted in the fuel cell with the hydrogen reaction product can be delivered to the fuel cell as pure oxygen from a pure oxygen supply, and/or enriched oxygen from an enriched oxygen supply and/or as oxygen from ambient air.

Regardless of which oxygen source is selected, electricity is produced within the fuel cell as the following reaction (IV) proceeds within fuel cell 32:

2H₂ + O₂ -> 2H₂O (+ electricity + heat) (IV)

with heat, electricity and water produced as byproducts of fuel cell reaction (IV) with the electricity directed from the fuel cell 32 to electric motor 36 for distributed electric propulsion via, for example an electrical converter 35 placed in communication with, and configured to receive, electrical current from electricity produced by fuel cell 32. Residual, unreacted hydrogen and the water byproduct from the fuel cell reaction can be recirculated into system 10, with the residual hydrogen circulated back to mix with the lower temperature hydrogen from the optional water separator 31, and with water separated from sieving/filtering locations in the system reintroduced (e.g. recirculated) to the Al/water reactor as recirculated reactant water.

A hydrogen molecular sieve can be optionally incorporated into the present system to treat recirculated and generated hydrogen. In addition hydrogen in a high-temperature-H₂O stream generated from the Al/water reactor can be used directly by the fuel cell if the fuel cell operates at high hydrogen utilization that is preferred for higher system efficiency. In addition, the fuel cell exhaust gas containing H₂O can be directly recirculated into the Al/water reactor for the Al/water reaction.

According to present aspects, the amount of water produced by fuel cell reaction (IV) of system 10, in theory, can be substantially equivalent to, and otherwise "match" the amount of water consumed in the Al/water combustion. The recirculation of water to the Al/water reactor from water generation processes at the fuel cell conserves water in the system, and otherwise mitigates the total amount of additional water supplied as reactant water into system 10. Such water recirculation (e.g., recycling) further increases system efficiency, and further reduces the overall weight of the system, and system components; an additional advantage of the present systems when incorporated into weight-critical applications such as, for example, aircraft. Present aspects further contemplate the availability of water considered to be auxiliary water 20 from an initial water source 21 (e.g., a water container, a water vessel, a water reservoir, a water tank, etc.) that can be introduced as a "starting" water reactant at system initiation, or as a supplemental water reactant into the Al/water reactor, as needed, during system operation, including, for example, system initiation, etc.

According to present aspects, the exothermic reaction in the Al/water reactor is sustained by the replenishment of additional aluminum as a reactant starting material along with reactant water supplied to the reaction in the Al/water reactor by both recycled/redirected water formed at the fuel cell along with (if needed) auxiliary water 20 supplied to the Al/water reactor from the water source 21 that can be referred to herein, equivalently as an auxiliary water supply 21.

In addition, thermal energy provided to the system from the exothermic reaction at the Al/water reactor, can be supplemented and/or regulated by selectively and strategically placed heaters and heat exchangers in a fourth "stage" of the system to, together, implement a capture and redirection of waste heat to further augment the present highly efficient, zero-emission mechanical and/or electrical power generation system that is configured to deliver requisite amounts of generated electricity and amounts of mechanical power to power one or more electrical and mechanical motors that are in communication with the present systems. As described herein, motors incorporated into the present systems are configured to translate electricity received from the present system to power and otherwise provide selected propulsion requirements to, for example, an aircraft comprising the system and the motors, etc., and also at least assist in other heating and/or power requirements onboard, for example, an aircraft. Additional vehicle heating requirements and uses that can derive benefits from the capture and redirection of waste heat according to the present systems can include, for example, cabin heating, de-icing functions, galley component heating, etc.

That is, according to present aspects, the discharged aluminum-containing reaction product (including, e.g., Al₂O₃ byproduct) of the Al/water reaction (at least upon separation/removal/collection from the produced hydrogen stream) retains substantial thermal energy that, in the present system, is harvested by the first heat exchanger and transferred to a "working fluid" (referred to equivalently herein as a "fluid medium") in the present system including, for example, auxiliary water supplied to the Al/water reactor (in the system first stage), air provided to the fuel cell (in the system third stage), as well as additional power generation and/or other aircraft power or heating functions. Other aircraft power or heating functions deriving benefits from energy re-directed from the first heat exchanger can include, for example, powering a turbo compressor, reducing energy needs for subsequent processes within and/or outside of the present system, etc., all of which can further improve and otherwise positively impact the total efficiency and usefulness of the present systems.

For example, the present systems can further significantly reduce power needs within and outside of the system, including, for example, power/heating needs outside of the present system that would otherwise divert precious vehicle onboard energy from other limited power sources including, for example, batteries, and/or other electrical energy sources, thus significantly improving overall onboard system efficiencies. Still further, scavenged heat captured by the first heat exchanger can be delivered as electrical energy via, for example, thermoelectric or other waste heat recovery devices and/or systems (e.g., heat-to-electricity devices) placed in communication with the first heat exchanger, for the purpose of, for example, replenishing existing batteries or charging separate additional dedicated batteries onboard a vehicle such as, for example, an aircraft.

In addition, additional thermal energy is captured in system 10, as the heated air leaving fuel cell 32 (that can, for example leave fuel cell at an elevated temperature of about 750°C) is directed to second heat exchanger 60. The high-temperature vitiated air (e.g., exhaust air, etc.) released from the cathode side of the fuel cell 32 (e.g., in the atmospheric O₂ reaction with H₂ in the fuel cell) also delivers amounts of waste heat in the present system that is recovered or scavenged in the present system through the selective placement within the present system of a second heat exchanger 60. In addition, exhaust air exiting the second heat exchanger 60 can comprise thermal energy with high pressure and can be directed to drive a mechanical device (e.g., a turbine to further harvest system energy, that can be used, for example, to power an inlet air compressor or other power need.

As described herein in system 10, as shown in FIG. 1, the recovered/scavenged waste heat from the fuel cell can be, for example, used to increase the temperature, or "heat up" atmospheric oxygen delivered to the fuel cell via, for example, the fuel cell inlet. Again, the thermal transfer of collected, recovered, redirected waste heat to elements of the present system increases system efficiency by, for example, bringing inlet air to a selected temperature to the fuel cell inlet(s) at a temperature that is higher than the ambient or atmospheric air present outside the present system.

In addition, other same or different aircraft power or heating functions described herein with respect to the first heat exchanger can derive the same or different benefits from energy that is redirected from the second heat exchanger, thus further significantly improving overall onboard system efficiencies. More than one heat exchanger may be placed in line with the fuel cell to achieve this type of heat redirection as present aspects contemplate the second heat exchanger (at or near the fuel cell) regulating fluid medium temperatures entering and leaving the fuel cell (e.g., avoiding a temperature change due the redirection of scavenged heat to serve other vehicle systems, etc.).

Returning to FIG. 1, a first heat exchanger 50 is placed in system 10 in a location that is in thermal communication with elements of the Al/water reactor assembly to capture waste heat of collected aluminum-containing reaction product 17 (that can include, for example, Al₂O₃ retained within aluminum-containing reaction product collector 18) that is produced as a byproduct of the reaction (along with product H₂) occurring in the Al/water reactor. Such collected or "scavenged" waste heat can be reclaimed from the collected aluminum-containing reaction product by the first heat exchanger that can be positioned (as shown in FIG. 1) proximate to the aluminum-containing reaction product (e.g., Al₂O₃) collector 18. In a further present example, the first heat exchanger can be positioned in thermal communication with the Al/water reactor itself, lines into or out from the Al/water reactor and/or the Al₂O₃ collector, etc.; elements and/or components of the Al/water reactor assembly that accumulate heat in operation or can otherwise emit heat from elevated temperatures during operation, etc. Depending upon the type of vehicle incorporating the present system, the aluminum-containing reaction product that can be separated and directed to the aluminum-containing reaction product collector can be discharged from the collector, or the aluminum-containing reaction product can be discharged from the system as it is produced and can be released from the vehicle into an environment external to the vehicle (e.g., a sub-surface marine vehicle, etc.).

As shown in FIG. 1, the first heat exchanger 50 can be positioned in communication with a fluid medium that can be a water flow (e.g., the water reactant 20 provided to the Al/water reactor from the initial/auxiliary water source 21, or reservoir, etc.), or another working fluid, for the purpose of "pre-heating" or augmenting heating delivered to increase the temperature of the water reactant provided to react with the aluminum provided to the Al/water reactor (referred to equivalently herein as an "Al/water combustion chamber" and/or "Al/water reaction chamber").

As shown in FIG. 1, system 10 further comprises a second heat exchanger 60 placed in thermal communication with at least one component of fuel cell assembly 30. As shown in FIG. 1, second heat exchanger is placed "in line" with fuel cell 32 to receive thermal energy from the heated air exhausted from fuel cell 32 during the reaction in fuel cell 32 producing water from hydrogen and oxygen reactants supplied to the fuel cell 32. As with the first heat exchanger 50, the second heat exchanger in system 10 can be positioned in thermal communication with the fuel cell, lines into or out from the fuel cell, elements and/or components of the fuel cell, etc., that accumulate heat in operation or can otherwise emit heat from elevated temperatures during operation of the fuel cell, etc.

In addition, additional thermal energy is captured in system 10 as the heated unreacted air leaving fuel cell 32 (that can, for example leave fuel cell at an elevated temperature of about 750°C) is directed to second heat exchanger 60 can be positioned in communication with a fluid medium that, in the case of the second heat exchanger, is an air flow (e.g., a heated air flow that can be at a temperature of about 750°C and at a pressure of about 54 psi, etc.). The second heat exchanger is configured to redirect thermal energy acquired from, for example, a heated air flow (exhausted high-temperature air from the fuel cell, etc.), with the second heat exchanger heating ambient air (that can contain atmospheric oxygen) to, for example, increase the temperature of the ambient air and "pre-heat" the ambient air before the ambient air containing atmospheric oxygen is again delivered to the fuel cell.

In another present example, the second heat exchanger can be configured to redirect thermal energy acquired from the heated air flow (e.g., exiting the fuel cell assembly) to a fluid medium (e.g., air, water, etc.) of another aircraft system, for example, another vehicle system requiring heating, etc., and/or for the purpose of "pre-heating" or augmenting thermal energy delivered from another heating source within or outside of the system 10 to increase the temperature of the a fluid medium in addition to the atmospheric oxygen in an air flow delivered back to the fuel cell for water generation.

Again, as shown in FIG. 1, system 10 is configured to incorporate a power generating "first stage" where the heated hydrogen is generated from the exothermic reaction of aluminum reacted with water in the Al/water reactor. According to present aspects, power released from the Al/water reactor in the form of hydrogen and steam can be delivered to a mechanical device (e.g., such as a steam turbine 24 in communication with a propeller) that can translate the power mechanically, to "drive", for example, a propeller. In addition, the power from steam can be delivered to a mechanical electrical generator to produce electricity that can be used to power an electric motor, or that can be delivered to an energy storage device (e.g., a battery that can be a rechargeable battery), or that can be delivered to power another electrical need in a vehicle housing the present system. In this "first stage" of system 10 the energy generated depends upon the detail of the Al/water generator; however, present aspects contemplate the Al/water reactor contributing an energy generation component of the system 10 that can deliver, in one example, about 4.79 kWh/kg Al supplied to the reactor.

As the Al/water reaction byproducts in the form of heated hydrogen and heated water vapor (e.g., steam) are directed to the mechanical assembly "second stage" at a temperature of about 600°C and at a pressure of about 600 psi, the mechanical assembly that can deliver, for example, about 3.76 kWh/kg Al of mechanical energy.

After optional water separation, heated hydrogen from the turbine and recirculated hydrogen already present exiting (and redirected back to) the fuel cell is delivered to the fuel cell in the "third stage" of system 10 to react in the fuel cell with oxygen to produce water and electricity. As shown in FIG. 1, and according to one example, the components of the fuel cell assembly "third stage" can be selected to produce an energy generation component of the system 10 that can deliver, for example, about 3.83 kWh/kg Al electricity.

Present aspects are directed to the incorporation of one or more fuel cells into the present systems and apparatuses. In contemplated fuel cells incorporated into present aspects, the molecules of hydrogen, as the fuel gas, and oxygen (which can be delivered to the fuel cell as atmospheric oxygen from an ambient air source, for example) are split into their elements in the solid oxide fuel cell and react with one another. The reaction produces direct current (DC) that, depending on the end use, can be converted to alternating current (AC) via an inverter that can be, for example, a motor controller. Heat and water are also generated. According to present aspects, the electrochemical reaction in the fuel cell (e.g., solid oxide fuel cells) can occur at temperatures between about 500°C and 850°C. In another example, the electrochemical reaction in the fuel cell can occur at temperatures between about 500°C and 700°C. In a further example, the electrochemical reaction in the fuel cell (e.g., high temperature proton exchange membrane (HTPEM) fuel cell and/or phosphoric acid fuel cell (PAFC)) can occur at temperatures between about 150°C to 250°C. In another example, the electrochemical reaction in the fuel cell can occur at temperatures between about 150°C to 500°C.

According to present aspects, the Al/water reactor in the first stage of system 10 shown in FIG. 1 can incorporate aluminum powder as an aluminum-containing reactant from an aluminum powder storage source, with the aluminum powder, for example, injected into the Al/water reactor (referred to equivalently herein as the Al/water combustor) in the presence of water vapor and reacted in the Al/water reactor to form hydrogen (H₂) and aluminum oxide, aluminum hydroxide, unreacted aluminum, etc., byproducts. The hydrogen that is produced can be separated and then recirculated to react with oxygen within one or more fuel cells to produce electricity and water. The extracted electrical energy that is produced in the fuel cell(s) is then directed to power electrical motors (e.g., in an all-electrical and/or in a hybrid electric vehicle that can include, for example, aircraft), and with the water byproduct produced in the fuel cell reaction redirected and/or recirculated to supply water to the Al/water combustion reaction in the Al/water reactor. In addition, at stated herein, extracted electrical energy that is produced in the fuel cell(s) can also be directed to charge a battery and/or power other devices and systems within a vehicle including, for example, an aircraft.

System 10 as shown in FIG. 1, and as incorporated into a vehicle, can further include the mechanical linkages between components including piping, tubing, ductwork, chambers, reservoirs, etc. with system 10 further including pumps, heaters, filters separators, cyclones, etc., beyond those explicitly shown in FIG. 1. In addition, components for controlling the system can include controllers, processors, hardware, software, that can be directly incorporated into the system, or that can be at least partially located remotely from the system, and indeed some components controlling and monitoring the system may be located remotely from the vehicle with connectivity to the system achieved wirelessly via, for example, Bluetooth, Internet of things, etc. Accordingly, the present systems, apparatuses, and methods can be 1) controlled, monitored, adjusted, etc. onboard a vehicle, and can be 2) controlled, monitored, adjusted, etc. remotely from the vehicle, if desired.

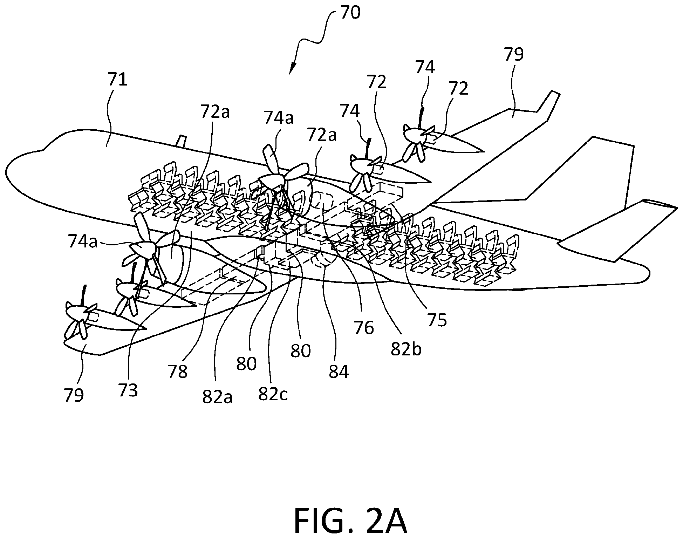

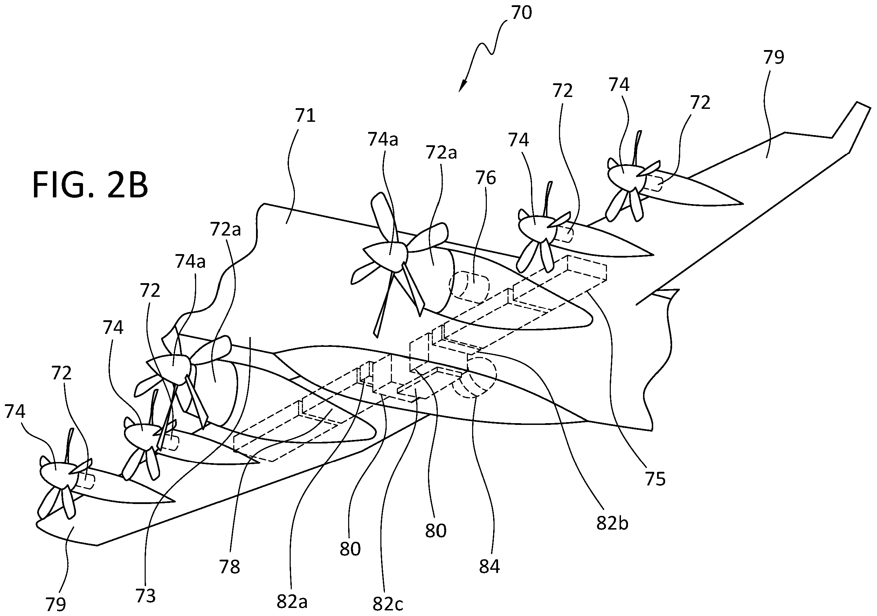

While FIGs. 2A and 2B, illustrate a present system housed within a vehicle in the form of an aircraft, and configured to power electric motors and/or mechanical propellers in the aircraft, according to present aspects, the present highly-efficiency, zero-emission power generation systems can be incorporated into and otherwise implemented to provide a zero-emission power generation system configured to power vehicles including, for example, crewed and uncrewed terrestrial vehicles (e.g., cars, vans, trucks, buses, motorcycles, rail-based vehicles), crewed and uncrewed marine surface and sub-surface vehicles, as well as crewed and uncrewed aircraft, and combinations thereof.

FIG. 2A is an exposed view of a vehicle in the form of an aircraft 70 that can be at least partially electrically-powered and partially powered by mechanical power by incorporating the present apparatuses, systems, and methods presented herein. FIG. 2B is an enlarged exposed view of the vehicle shown in FIG. 2A, focusing on the present system incorporated into the vehicle presented in the form of an aircraft 70. Aircraft 70 includes a fuselage 71 and wings 79 with wings 79, as shown in FIGs. 2A and 2B, in communication with a plurality of motors and motor types, including both exclusively electrically powered motors 72 referred to equivalently herein as "electric motors" and "electrically-powered motors"), and mechanical motors 72a that can be at least partially driven by mechanical forces that can include, for example, a steam-driven turbine, and/or that can have a combustion-type chamber replaced by a motor design that is configured to be powered by a high-temperature and high pressure steam/hydrogen mixture, for example. Motors 72 are shown with propeller 74 in communication with motor 72 (and with propeller 74a in communication with motor 72a). That is, according to present aspects (not explicitly shown), all of the motors included on a vehicle can be electric motor(s) powered by electricity exclusively.

In another example, and as shown in FIGs 1, 2A and 2B, some of the motors (72a) can at least initially take advantage of steam produced by the initial Al/water reaction and be powered by propulsive forces of the high-temperature and high-pressure steam/hydrogen mixture, for example, further increasing the overall efficiency and power generation capability of presently disclosed systems, apparatuses, and methods. Such "mechanical" motors can include, for example, hydraulic motors, pneumatic motors, etc.

Fuselage 71 further houses an equipment bay 73 that can further house, along with the internal regions of wings 79, the present apparatuses and systems that are configured to power the motors 72, 72a. The elements of the system 10 shown in FIG. 1 can completely reside within aircraft 70. As shown in FIGs. 2A and 2B, aircraft 70 comprises present systems and apparatuses configured to provide 100% of the power selected to successfully drive and otherwise power the motors 72, 72a of aircraft 70 to achieve and maintain selected aircraft flight specifications (e.g., speed, altitude, range, etc.) during a selected flight operation for aircraft 70, including, for example, the motor power requirements to achieve aircraft takeoff within a selected runway distance, etc.

The elements of system 10 shown in FIG 1, are shown in FIGs. 2A, 2B positioned within aircraft 70, with differing numbers for the various system elements in FIGs. 2A,2B (as compared to the component enumeration found in FIG. 1). As shown in FIGs. 2A, 2B, the exposed view of aircraft 70 shows an aluminum reactant supply container 75 (e.g., an aluminum reactant "tank", etc.) housing aluminum-containing reactant that can be delivered to the Al/water reactor 76 to react with an amount of water delivered as at least an initial water charge from initial water source 84 to Al/water reactor (that can be referred to equivalently herein as an "auxiliary water source", and/or "water tank", and/or water container"). In addition, although not shown in FIGs. 2A, 2B, after the power generation system is initiated and engaged and water is produced as a byproduct of the fuel cell operation, additional amounts of water (byproduct) from the fuel cell reaction are directed to the Al/water reactor for further H₂ generation, substantially increasing the efficiency of the present systems, and decreasing system mass (e.g., decreasing total required water volume within an auxiliary water source contained within a water vessel, etc.).

As further shown in FIGs. 2A, 2B, the Al₂O₃ that is produced as a reaction product (along with the hydrogen reaction product) in the Al/water reactor is directed to aluminum-containing reaction product collector 78. The generated hydrogen reaction product can be directed (e.g., along with steam in a hydrogen-containing gas mixture) to a turbine or other steam-powered mechanical drive mechanism to drive the mechanical propeller 74a that is in communication with motor 72a. Optionally, hydrogen is separated from the stream and directed to fuel cells 80. Atmospheric oxygen can also be directed to fuel cells 80 such that the hydrogen and oxygen react in fuel cells 80 to produce water and electricity. The electrical current produced in the fuel cells 80 is converted, if necessary, by an inverter/converter in line in the system and is otherwise configured to deliver appropriate electrical power to one or more electrical motors 72 configured to drive a propeller 74 associated with each electrical motor 72. As stated herein, during selected flight phases, electricity generated in the system can also be directed to at least partially or intermittently power motors 72a. In other present examples, the motors 72a are always mechanically driven from mechanical power generated from the present system, as described herein.

As further shown in FIGs. 2A and 2B, heat exchangers are positioned within the present power generation system to significantly increase system efficiency. Heat exchanger 82a is shown in FIGs. 2A and 2B positioned proximate to aluminum-containing reaction product collector, with heat exchanger 82 configured to capture or otherwise harvest waste heat emanating from collector. Heat exchanger 82a, 82b can be of a type that correspond to the "first" heat exchanger 50 shown in system 10 in FIG. 1. Heat exchanger 82c is shown in FIGs. 2A and 2B, and positioned proximate to, or otherwise in line with a fuel cell 80, with heat exchanger 82c configured to capture or otherwise harvest waste heat from a fuel cell 80. Heat exchanger 82c can be of a type that corresponds to the "second" heat exchanger 60 shown in system 10 in FIG. 1.

The orientation of the present systems and apparatuses within aircraft 70 represent a useful example, and the implementation of present systems and apparatuses within a vehicle (that can be in the form of an aircraft) is not limited to the architectural system positioning of system elements as shown in FIGs. 2A and 2B. It is understood that the elements of system 10 shown in FIGs. 2A and 2B are intended to be in communication with one another and configured to interact with one another as set forth herein and as shown in system 10 of FIG. 1, and as further described herein. That is, the communication of the system elements with one another can be that as shown in FIG. 1, and as described herein, such that the present zero-emission power generation system 10 shown in FIG 1 is oriented within, for example, aircraft 70, as shown in FIGs. 2A and 2B, and configured to generate and deliver the requisite 100% of the electrical and/or mechanical power needed by the electrical and mechanical motors onboard an aircraft.

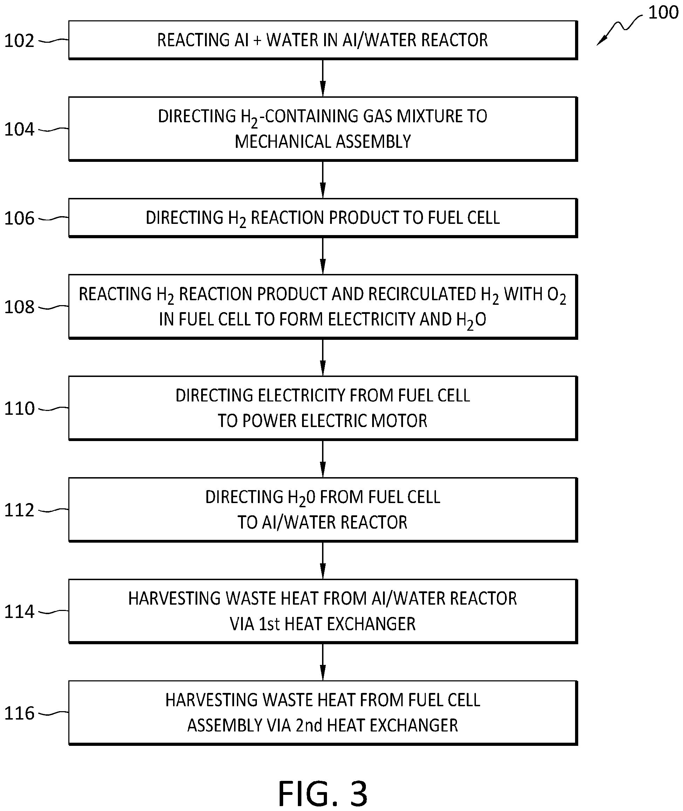

FIGs. 3, 4, and 5 are flowcharts outlining present methods that can incorporate the apparatuses and systems described herein and that are shown in FIGs. 1, 2A, and 2B. As shown in FIG. 3, a present aspect is directed to a method 100 for powering a vehicle via onboard-generated electricity from a zero-emission power generation system, with the method 100 including reacting 102, in an aluminum/water reactor, an amount of aluminum-containing reactant from an aluminum-containing reactant source with an amount of water reactant from at least one of an initial water source and recirculated water to form a hydrogen reaction product and an aluminum-containing reaction product in an aluminum/water reaction. The method 100 further includes directing 104 the hydrogen-containing gas mixture from the aluminum/water reactor, and at a temperature that can range from about 350°C to about 700°C and at a pressure ranging from about 300 psi to about 3000 psi to a mechanical assembly, directing 106 the hydrogen reaction product from mechanical assembly to a fuel cell, with the fuel cell including at least one fuel cell inlet and at least one fuel cell outlet, and reacting 108, in the fuel cell, at least one of the hydrogen reactant product and recirculated hydrogen with atmospheric air in a fuel cell reaction to generate water and electricity from the zero-emission power generation system. The method 100 further includes directing 110 electricity from the fuel cell to power a motor, with the motor in electrical communication with the fuel cell, and directing 112 water produced in the fuel cell from the fuel cell as the recirculated water to the aluminum/water reactor. Method 100 further includes harvesting 114 waste heat from the aluminum/water reaction in a first heat exchanger, with the first heat exchanger in communication with the aluminum/water reactor and/or the aluminum-containing reaction product collector, with the first heat exchanger configured to heat the water reactant directed to the aluminum/water reactor, and harvesting waste heat from heated air produced from the fuel cell reaction in a second heat exchanger, and with the second heat exchanger in communication with the fuel cell.

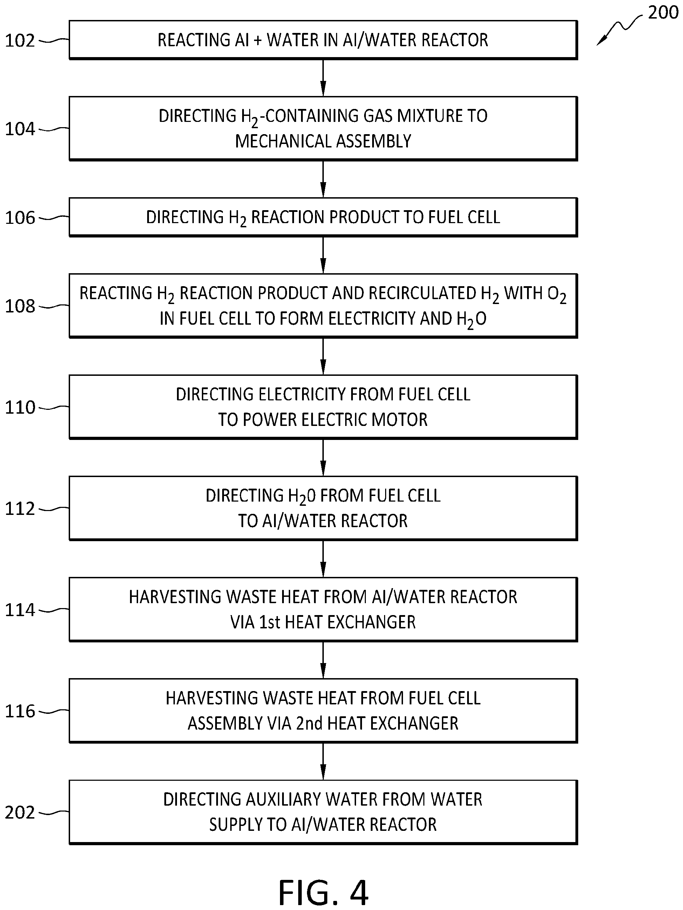

FIG. 4 is a flowchart outlining a present method 200 that includes the steps presented in method 100, with method 200 further including directing 202 an amount of auxiliary water as the water reactant from an initial water source to the Al/water reactor.

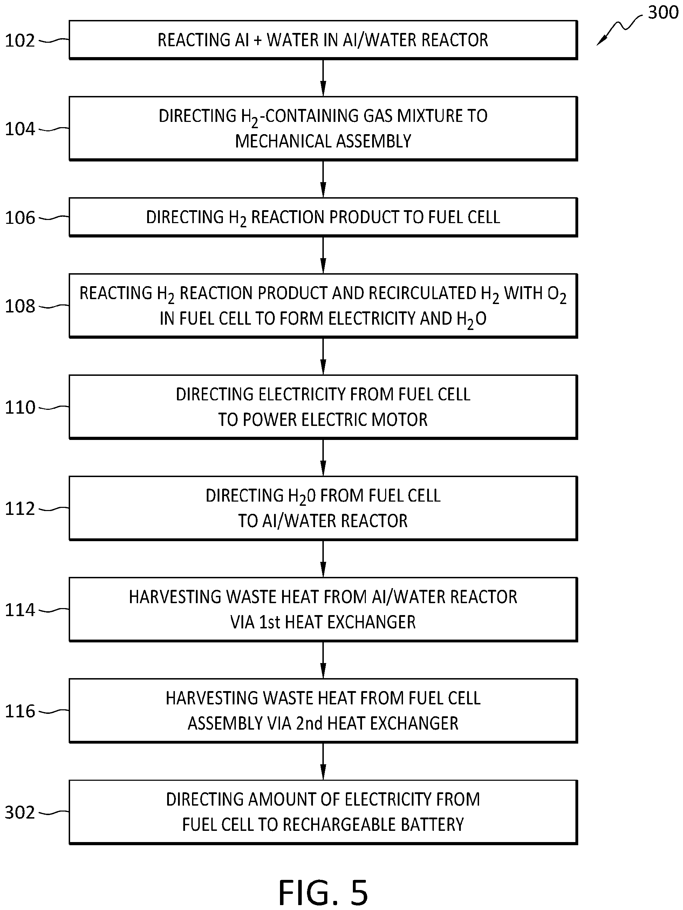

FIG. 5 is a flowchart outlining a present method 300 that includes the steps presented in method 100, with method 300 further including directing 302 a further amount of electricity from the fuel cell to a rechargeable battery, with the rechargeable battery in electrical communication with at least one fuel cell, and with the rechargeable battery configured to receive an electrical charge from the zero-emission power generation system.

The present apparatuses, systems, and methods comprise significant advantages over hydrogen generation systems by, at least, deriving additional benefits of system economy and sustainability through the use of hydrogen produced (in the Al/water reactor) as a reactant with atmospheric oxygen in the formation of water (in the fuel cell reaction) and electricity, with the water generated in the fuel cell reaction recirculated to the aluminum/water combustion assembly for further reaction with aluminum to generate additional hydrogen, and with hydrogen produced in the Al/water reactor recirculated within the system and recirculated through the fuel cell to react with atmospheric oxygen supplied to the fuel cell.

The present aspects may, of course, be carried out in other ways than those specifically set forth herein without departing from essential characteristics of the present disclosure. The present aspects are to be considered in all respects as illustrative and not restrictive, and all changes coming within the meaning and equivalency range of the appended claims are intended to be embraced therein.

Further, the present disclosure comprises aspects according to the following clauses:
Clause 1. A system for zero-emission propulsion for a vehicle, said system comprising:
   an aluminum/water reaction assembly, said aluminum/water reaction assembly comprising:
   an aluminum/water reactor configured to react an aluminum-containing reactant from an aluminum-containing reactant source with a water reactant from a water reactant source to form an aluminum-containing reaction product, and a hydrogen-containing gas mixture;
   an aluminum-containing reaction product collector;
   a first heat exchanger in thermal communication with at least one of the aluminum/water reactor and the aluminum-containing reaction product collector;
   a mechanical assembly in communication with the hydrogen-containing gas mixture;
   a fuel cell assembly in communication with the aluminum/water reactor, said fuel cell assembly comprising:
      a fuel cell configured to react an amount of hydrogen-containing gas mixture from the aluminum/water reactor with an amount of oxygen directed to the fuel cell to form electricity and a water byproduct;
   a second heat exchanger in thermal communication with the fuel cell; and
   an electrically-powered motor in communication with the fuel cell.
Clause 2. The system of Clause 1, wherein the mechanical assembly further comprises a mechanical propulsion assembly, said mechanical propulsion assembly configured to convert thermal energy into mechanical power.
Clause 3. The system of Clause 1, wherein the mechanical assembly further comprises a mechanical electric generator, said mechanical electric generator configured to convert thermal energy into electricity.
Clause 4. The system of Clause 1, further comprising a water separator in communication with the mechanical assembly.
Clause 5. The system of Clause 1, wherein the water byproduct produced in the fuel cell is configured to recirculate from the fuel cell to the aluminum/water reactor.
Clause 6. The system of Clause 1, wherein unreacted hydrogen from the fuel cell is configured to recirculate into at least one of the fuel cell and the aluminum/water reactor.
Clause 7. The system of Clause 1, wherein the fuel cell is a solid oxide fuel cell.
Clause 8. The system of Clause 1, wherein the fuel cell is at least one of a high temperature proton exchange membrane fuel cell and a phosphoric acid fuel cell.
Clause 9. The system of Clause 1, wherein the first heat exchanger is configured to harvest waste heat from at least one of the aluminum-containing reaction product collector and the aluminum/water reactor.
Clause 10. The system of Clause 1, wherein the second heat exchanger is configured to harvest waste heat from at least one of the water byproduct from the fuel cell, exhaust air vented from the fuel cell, and heat rejected by the fuel cell.
Clause 11. The system of Clause 1, wherein an amount of oxygen reacted in the fuel cell with the hydrogen reaction product is delivered to the fuel cell as atmospheric oxygen.
Clause 12. The system of Clause 1, wherein an amount of oxygen reacted in the fuel cell with the hydrogen reaction product is delivered to the fuel cell as at least one of enriched oxygen delivered to the fuel cell from an enriched oxygen supply, and pure oxygen delivered to the fuel cell from a pure oxygen supply.
Clause 13. The system of Clause 1, wherein at least one of the first heat exchanger and the second heat exchanger is configured to direct at least a portion of waste heat generated in the system to address a thermal demand of a different vehicle system.
Clause 14. The system of Clause 13, wherein at least one of the first heat exchanger and the second heat exchanger is configured to direct at least a portion of the waste heat to at least one of one or more waste heat recovery devices and one or more waste heat recovery systems, said one or more waste heat recovery devices and said one or more waste heat recovery systems configured to generate electricity from heat.
Clause 15. The system of Clause 14, wherein the heat-to-power device comprises a thermoelectric device.
Clause 16. The system of Clause 1, wherein the aluminum-containing reactant comprises powdered aluminum.
Clause 17. The system of Clause 1, further comprising a fluid medium in communication with at least one of the first heat exchanger and the second heat exchanger, said at least one of the first heat exchanger and the second heat exchanger configured to increase a temperature of said fluid medium from an initial fluid medium temperature to a second fluid medium temperature.
Clause 18. The system of Clause 17, wherein the fluid medium comprises at least one of atmospheric air, water, oxygen, and hydrogen.
Clause 19. The system of Clause 1, wherein the system produces zero hydrocarbon emissions.
Clause 20. The system of Clause 1, wherein said system is further in communication with a rechargeable battery, said rechargeable battery configured to receive an electrical charge from the system.
Clause 21. A vehicle comprising the system of Clause 1.
Clause 22. An aircraft comprising the system of Clause 1.
Clause 23. A method for powering a vehicle via onboard-generated electricity from a zero-emission power generation system, the method comprising:
   reacting in an aluminum/water reactor an amount of aluminum-containing reactant from an aluminum-containing reactant source with an amount of water reactant from at least one of an initial water source and recirculated water to form a hydrogen-containing gas mixture and an aluminum-containing reaction product;
   directing the hydrogen-containing gas mixture from the aluminum/water reactor at a temperature ranging from about 350°C to about 700°C and at a pressure ranging from about 300 psi to about 3000 psi to a mechanical assembly;
   directing hydrogen from the mechanical assembly to a fuel cell, said fuel cell comprising at least one fuel cell inlet and at least one fuel cell outlet;
   reacting in the fuel cell at least one of hydrogen from the mechanical assembly and recirculated hydrogen with atmospheric air in a fuel cell reaction to generate water and electricity from the zero-emission power generation system;
   directing electricity from the fuel cell to power a motor, said motor in electrical communication with the fuel cell;
   directing water produced in the fuel cell from the fuel cell as the recirculated water to the aluminum/water reactor;
   harvesting waste heat from the aluminum/water reaction in a first heat exchanger, said first heat exchanger in communication with at least one of the aluminum/water reactor and the aluminum-containing reaction product collector, said first heat exchanger configured to heat the water reactant directed to the aluminum/water reactor; and
   harvesting waste heat from heated air produced from the fuel cell reaction in a second heat exchanger, said second heat exchanger in communication with the fuel cell.
Clause 24. The method of Clause 23, further comprising:
   recirculating an amount of hydrogen from the at least one fuel cell outlet to the at least one fuel cell inlet.
Clause 25. The method of Clause 24, further comprising:
   directing a further amount of electricity from the fuel cell to a rechargeable
   battery, said rechargeable battery in electrical communication with the fuel cell, said rechargeable battery configured to receive an electrical charge from the zero-emission power generation system.
Clause 26. The method of Clause 23, wherein the mechanical assembly further comprises a mechanical propulsion assembly, said mechanical propulsion assembly configured to convert thermal energy into mechanical power.
Clause 27. The method of Clause 23, wherein the mechanical assembly further comprises a mechanical electric generator, said mechanical electric generator configured to convert thermal energy into electricity.

## Claims

1. A system (10) for zero-emission propulsion for a vehicle, said system comprising:
an aluminum/water reaction assembly (11), said aluminum/water reaction assembly comprising:
an aluminum/water reactor (12) configured to react an aluminum-
containing reactant from an aluminum-containing reactant source with a water reactant (20) from a water reactant source to form an aluminum-containing reaction product (17), and a hydrogen-containing gas mixture product;
an aluminum-containing reaction product container (18);
a first heat exchanger (50) in thermal communication with at least one of the aluminum/water reactor (12) and the aluminum-containing reaction product container (17);
a mechanical assembly (23) in communication with the hydrogen-containing gas mixture;
a fuel cell assembly (30) in communication with the aluminum/water reactor (12),
said fuel cell assembly comprising:
a fuel cell (32) configured to react an amount of hydrogen-containing gas mixture from the aluminum/water reactor (12) with an amount of oxygen directed to the fuel cell (32) to form electricity and a water byproduct;
a second heat exchanger (60) in thermal communication with the
fuel cell (32); and
an electrically-powered motor (36) in communication with the fuel cell.

2. The system of Claim 1, wherein the mechanical assembly (23) further comprises a mechanical propulsion assembly (24, 26, 27), said mechanical propulsion assembly configured to convert thermal energy into mechanical power.

3. The system of Claim 1, wherein the mechanical assembly (23) further comprises a mechanical electric generator, said mechanical electric generator configured to convert thermal energy into electricity.

4. The system of Claim 1, further comprising a hydrogen separator (28) in communication with the mechanical assembly (23).

5. The system of any one of the preceding Claims, comprising a water separator (31) connected to the fuel cell (32), wherein the water byproduct produced in the fuel cell (32) is configured to recirculate from the fuel cell to the aluminum/water reactor (12).

6. The system of any one of the preceding Claims, wherein the fuel cell is either a solid oxide fuel cell or at least one of a high temperature proton exchange membrane fuel cell and a phosphoric acid fuel cell .

7. The system of any one of the preceding Claims, wherein the fuel cell (32) is at least one of a high temperature proton exchange membrane fuel cell and a phosphoric acid fuel cell.

8. The system of any one of the preceding Claims, comprising either an enriched oxygen supply or a pure oxygen supply, wherein an amount of oxygen reacted in the fuel cell (32) with the hydrogen reaction product is configured to be delivered to the fuel cell (32) as at least one of enriched oxygen delivered to the fuel cell from the enriched oxygen supply and as pure oxygen delivered to the fuel cell from the pure oxygen supply.

9. The system of any one of the preceding Claims, wherein at least one of the first heat exchanger (50) and the second heat exchanger (60) is configured to direct at least a portion of the waste heat to at least one of one or more waste heat recovery devices and one or more waste heat recovery systems, said one or more waste heat recovery devices and said one or more waste heat recovery systems configured to generate electricity from heat.

10. The system of any one of the preceding Claims, wherein the aluminum-containing reactant comprises powdered aluminum.

11. The system of any one of the preceding Claims, further comprising a fluid medium comprising at least one of atmospheric air, water, oxygen, and hydrogen, the fluid medium being in communication with at least one of the first heat exchanger (50) and the second heat exchanger (50), said at least one of the first heat exchanger and the second heat exchanger being configured to increase the temperature of said fluid medium from an initial fluid medium temperature to a second fluid medium temperature.

12. A vehicle, i.e. either a terrestrial vehicle, or a marine vehicle or an aircraft, comprising the system of any one of the preceding Claims.

13. A method (100) for powering a vehicle via onboard-generated electricity from a zero-emission power generation system (10), the method comprising:
reacting (102) in an aluminum/water reactor (12) an amount of aluminum-containing reactant from an aluminum-containing reactant source with an amount of water reactant from at least one of an initial water source and recirculated water to form a hydrogen-containing gas mixture and an aluminum-containing reaction product in the aluminum/water reaction;
directing (104) the hydrogen-containing gas mixture from the aluminum/water reactor at a temperature ranging from about 350°C to about 700°C and at a pressure ranging from about 300 psi to about 3000 psi to a mechanical assembly (23);
directing (106) hydrogen from the mechanical assembly (23) to a fuel cell (32), said fuel cell comprising at least one fuel cell inlet and at least one fuel cell outlet;
reacting (108) in the fuel cell at least one of hydrogen and recirculated hydrogen with atmospheric air in a fuel cell reaction to generate water and electricity from the zero-emission power generation system (10);
directing (110) electricity from the fuel cell to power a motor (36), said motor in electrical communication with the fuel cell (32);
directing (112) water produced in the fuel cell from the fuel cell as the recirculated water to the aluminum/water reactor (12);
harvesting (114) waste heat from the aluminum/water reaction in a first heat exchanger (50), said first heat exchanger being in communication with at least one of the aluminum/water reactor (12) and an aluminum-containing reaction product collector (17), said first heat exchanger (50) being configured to heat the water reactant directed to the aluminum/water reactor (12); and
harvesting (116) waste heat from heated air produced from the fuel cell reaction in a second heat exchanger (60), said second heat exchanger being in communication with the fuel cell (32).

14. The method (200) of Claim 13, further comprising:
directing (202) an amount of auxiliary water as water reactant from an initial water source to the aluminum/water reactor (12).

15. The method (300) of Claim 13, further comprising:
directing (302) a further amount of electricity from the fuel cell (32) to a rechargeable battery, said rechargeable battery in electrical communication with the fuel cell, said rechargeable battery being configured to receive an electrical charge from the zero-emission power generation system (10).
